# EUROPEAN PATENT SPECIFICATION

(11) **EP 2 059 061 B1**
(45) Date of publication and mention of the grant of the patent: **23.07.2014**
(21) Application number: 07792838.0
(22) Date of filing: 22.08.2007
(51) Int. Cl.: H04W 48/12, H04M 1/725, H04W 36/00, H04W 36/08, H04W 88/06, H04W 8/24

(54) **MOBILE COMMUNICATION SYSTEM, RADIO NETWORK CONTROL DEVICE, MOBILE TELEPHONE, AND CELL DISPLAY METHOD**
MOBILKOMMUNIKATIONSSYSTEM, FUNKNETZSTEUEREINRICHTUNG, MOBILTELEFON UND ZELLENANZEIGEVERFAHREN
SYSTÈME DE COMMUNICATION MOBILE, DISPOSITIF DE COMMANDE DE RÉSEAU RADIO, TÉLÉPHONE MOBILE, ET PROCÉDÉ D'AFFICHAGE DE CELLULE

(30) Priority: 23.08.2006 JP 2006225966
(43) Date of publication of application: 13.05.2009
(73) Proprietor: NEC Corporation, Minato-ku Tokyo 108-8001 (JP)
(72) Inventor: KOBAYASHI, Tsukasa, Tokyo 108-8001 (JP)
(74) Representative: Betten & Resch
(86) International application number: PCT/JP2007/066239
(87) International publication number: WO 2008/023723

(56) References cited:
- EP-A1- 1 670 269
- EP-A1- 1 991 023
- EP-A2- 1 603 290
- JP-A- 07 203 536
- JP-A- 2002 044 729
- JP-A- 2005 033 285
- VODAFONE GROUP: "Introduction of the HSDPA and E-DCH Capable Cell Indicator", 3GPP DRAFT; R2-052753-HSDPA+E-DCH CELL INDICATOR CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20051103, 3 November 2005 (2005-11-03), XP050129751, [retrieved on 2005-11-03]
- VODAFONE ET AL: "Service Requirement for HSDPA Indicator", 3GPP DRAFT; S1-050950_HSDPA_INDICATOR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. Los Angeles, CA, USA; 20051017, 17 October 2005 (2005-10-17), XP050224000, [retrieved on 2005-10-17]

## Description

### TECHNICAL FIELD

The present invention relates to a mobile communication system, a radio network controller, a cellular, and a locating cell display method for use therewith, and in particular, to locating cell display for a cell supporting High Speed Downlink Packet Access (HSDPA) and a cell supporting Enhanced-Dedicated Channel (E-DCH).

### RELATED ART

In a mobile communication system of, for example, Wideband-Code Division Multiple Access (W-CDMA), there is notified, to a user of a cellular, as an indicator to determine whether or not the user is currently locating in a cell supporting "HSDPA and E-DCH (High Speed Uplink Packet Access (HSUPA)), an HSDPA Cell Indicator or an E-DCH Cell Indicator using notification information (System Information Block Type 5 or System Information Block Type 5bis; reference is to be made to, for example, Non-Patent Document 1).

The cellular determines whether or not the indicator is True (true) to display pictograph on a screen indicating that the user is locating in a cell supporting HSDPA or a cell supporting E-DCH. Although depending on an application installed in the cellular, if the user is locating in a cell supporting HSDPA/E-DCH, it is possible to issue a packet call setup request in a format with a designation of Quality of Service (QoS) by setting a bit rate of a packet supporting HSDPA/E-DCH.

In other words, if the user is locating in a cell which is not supporting HSDPA/E-DCH, it is possible to issue a packet call setup request in a format with a designation of QoS by setting a bit rate corresponding to Release 99 of 3rd Generation Partnership Project (3GPP).

Non-Patent Document 1: "Radio Resource Control (RRC); Protocol Specification (Release 7) 10.2.48.8.8 System Information Block Type 5 and 5bis" [3GPP TS 25.331 v7.11.0 (2006-06)]

Document EP 1670 269 A1 describes a communication terminal capable of performing download of a file. A communication terminal includes an input detection section, a request section, a reception section, and a recognition section. When the input detection section detects an input of an information request number by a user, the request section transmits a request to a network to transmit a service-availability information. The service-availability information consists of area information indicating whether or not a serving cell of the communication terminal is included in an HSDPA service area and resource information indicating whether or not allocation of HSDPA resource to the communication terminal is possible, when the serving cell of the communication terminal is included in the HSDPA service area. The reception section receives the service-availability information transmitted from the network and the recognition section displays an antenna mark on a display section based on the area information and the resource information included in the service-availability information.

The document: VODAFONE GROUP: "Introduction of the HSDPA and E-DCH Capable Cell Indicator", 3GPP DRAFT; R2-052753-HSDPA+E-DCH CELL INDICATOR CR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20051103, 3 November 2005 (2005-11-03), XP050129751, [retrieved on 2005-11-03; relates to introduction of the HSDPA and E-DCH capable cell indicator.

### DISCLOSURE OF THE INVENTION

### PROBLEM TO BE SOLVED BY THE INVENTION

However, in the conventional mobile communication system as described above, the notification information cannot be acquired when a dedicated channel (Detected Channel (DCH)) is assigned to the cellular; hence, when the cellular moves into another cell through processing such as a handover, there does not exists an identifier to identify whether the cellular in the destination is locating in a cell supporting HSDPA or in a cell supporting E-DCH.

Therefore, an exemplary object of the present invention is to solve the above problem and to provide a mobile communication system, a radio network controller, a cellular, and a locating cell display method for use therewith capable of notifying a user of correct information indicating that the user is locating in a cell supporting HSDPA or E-DCH not only in a situation wherein the cellular is in a waiting state or is using a shared channel in which the cellular is capable of receiving the notification information, but also in a situation wherein the cellular moves to another cell while using a dedicated channel.

### MEANS FOR SOLVING THE PROBLEM

The invention is defined in the independent claims. Embodiments of the invention are defined in the dependent claims. The mobile communication system in accordance with an aspect is a mobile communication system in which a base station apparatus notifies, by use of notification information from the base station apparatus to a cellular, service corresponding information of a cell under control of the base station apparatus to the cellular; in the system,
at a transition of a state of the cellular, the service corresponding information of the cell is added to a message to be notified from the base station apparatus and is notified to the cellular.

The radio network controller in accordance with an aspect is a radio network controller for controlling a base station apparatus in a system in which the base station apparatus notifies, by use of notification information from the base station apparatus to a cellular, service corresponding information of a cell under control of the base station apparatus to the cellular, the controller including:
means for determining, at a transition of a state of the cellular, a correspondence between a base station apparatus associated with the transition and the service of the cell; and means for adding, when it is determined that the base station apparatus corresponds to the service of the cell, the service corresponding information of the cell of the base station apparatus to a message to be notified from the base station apparatus to the cellular to thereby notify the information to the cellular.

The cellular in accordance with an aspect is a cellular to which, by use of notification information from a base station apparatus to a cellular, service corresponding information of a cell under control of the base station apparatus is notified, the cellular including:
means for determining a service correspondence of the cell according to the service corresponding information added to a message notified from the base station apparatus at a transition of a state of the cellular; and means for displaying on a screen the service correspondence of the cell obtained by determining the service correspondence.

The locating cell display method in accordance with an aspect is a locating cell display method for use with a mobile communication system in which a base station apparatus notifies, by use of notification information from the base station apparatus to a cellular, service corresponding information of a cell under control of the base station apparatus to the cellular; in the method,
at a transition of a state of the cellular, the service corresponding information of the cell is added to a message to be notified from the base station apparatus and is notified to the cellular.

That is, in the mobile communication system of an aspect, a reconfiguration message indicating a handover or the like is notified to the cellular by adding information of an High Speed Downlink Packet Access (HSDPA) cell indicator and information of Enhanced-Detected Channel (E-DCH) cell indicator.

The cellular displays, based on the HSDPA cell indicator or the E-DCH cell indicator notified from the network, on the screen whether the cellular is locating in a cell supporting HSDPA or a cell supporting E-DCH (High Speed Uplink Packet Access (HSUPA)).

More specifically, in the mobile communication system of an aspect, at reception of the reconfiguration message, the cellular includes a function to recognize the HSDPA cell indicator and the E-DCH cell indicator stored in the message.

Also, the cellular includes a function to confirm the HSDPA or E-DCH cell indicator notified from the network and to display on the screen, if the indicator is "True (true), pictograph (drawings using pictorial symbols or pictures) corresponding to "locating in cell supporting HSDPA" or "locating in cell supporting E-DCH".

In the mobile communication system of an aspect, the base station apparatus includes a function to store the HSDPA and E-DCH cell indicators not only in the system information block type 5 (or the system information block type 5bis) but also in the reconfiguration message to send the message to the cellular.

Additionally, the mobile communication system of an aspect is applicable not only for services of HSDPA and E-DCH (HSUPA) but also for an operation in which the network notifies the cellular (user) of various service corresponding information of respective cells.

As a result, in the mobile communication system of an aspect, the correct information of "locating in a cell supporting HSDPA" or "locating in a cell supporting E-DCH" can be notified to the user not only when the cellular is in a waiting state or is using a shared channel in which the cellular is capable of receiving the notification information, but also when the cellular moves to another cell while using a dedicated channel.

### ADVANTAGES OF THE INVENTION

In accordance with the present invention, by using the configuration and the operation described above, there is obtained an advantage in which the correct information of "locating in a cell supporting HSDPA" or "locating in a cell supporting E-DCH" can be notified to the user not only when the cellular is in a waiting state or is using a shared channel in which the cellular is capable of receiving the notification information, but also when the cellular moves to another cell while using a dedicated channel.

### BRIEF DESCRIPTION OF DRAWINGS

[FIG. 1] is a block diagram showing a configuration example of a mobile communication system according to an exemplary embodiment of the present invention.
[FIG. 2] is a diagram showing a protocol architecture of a radio interface employed in the exemplary embodiment of the present invention.
[FIG. 3] is a block diagram showing a configuration example of a cellular of FIG. 1.
[FIG. 4] is a block diagram showing a configuration example of a radio network controller of FIG. 1.
[FIG. 5] is a diagram showing pictograph display example of "locating in cell supporting HSDPA" and "locating in cell supporting E-DCH" for the cellular of FIG. 1.
[FIG. 6] is a diagram showing a format example of a reconfiguration message according to the exemplary embodiment of the present invention.
[FIG. 7] is a diagram showing a format example of the reconfiguration message according to the exemplary embodiment of the present invention.
[FIG. 8] is a diagram showing a format example of the reconfiguration message according to the exemplary embodiment of the present invention.
[FIG. 9] is a diagram showing a format example of the reconfiguration message according to the exemplary embodiment of the present invention.
[FIG. 10] is a diagram showing a format example of the reconfiguration message according to the exemplary embodiment of the present invention.
[FIG. 11] is a diagram showing a format example of the reconfiguration message according to the exemplary embodiment of the present invention.
[FIG. 12] is a diagram showing a format example of the reconfiguration message according to the exemplary embodiment of the present invention.
[FIG. 13] is a diagram showing a format example of the reconfiguration message according to the exemplary embodiment of the present invention.
[FIG. 14] is a diagram showing a format example of the reconfiguration message according to the exemplary embodiment of the present invention.
[FIG. 15] is a diagram showing a format example of the reconfiguration message according to the exemplary embodiment of the present invention.
[FIG. 16] is a diagram showing a format example of the reconfiguration message according to the exemplary embodiment of the present invention.
[FIG. 17] is a diagram showing a format example of the reconfiguration message according to the exemplary embodiment of the present invention.
[FIG. 18] is a diagram showing a format example of the reconfiguration message according to the exemplary embodiment of the present invention.
[FIG. 19] is a diagram showing a format example of the reconfiguration message according to the exemplary embodiment of the present invention.
[FIG. 20] is a sequence chart to explain a locating cell display method in a cellular system according to the exemplary embodiment of the present invention.
[FIG. 21] is a sequence chart to explain the locating cell display method in the cellular system according to the exemplary embodiment of the present invention.
[FIG. 22] is a sequence chart to explain the locating cell display method in the cellular system according to the exemplary embodiment of the present invention.
[FIG. 23] is a sequence chart to explain the locating cell display method in the cellular system according to the exemplary embodiment of the present invention.

### BEST MODE FOR CARRYING OUT THE INVENTION

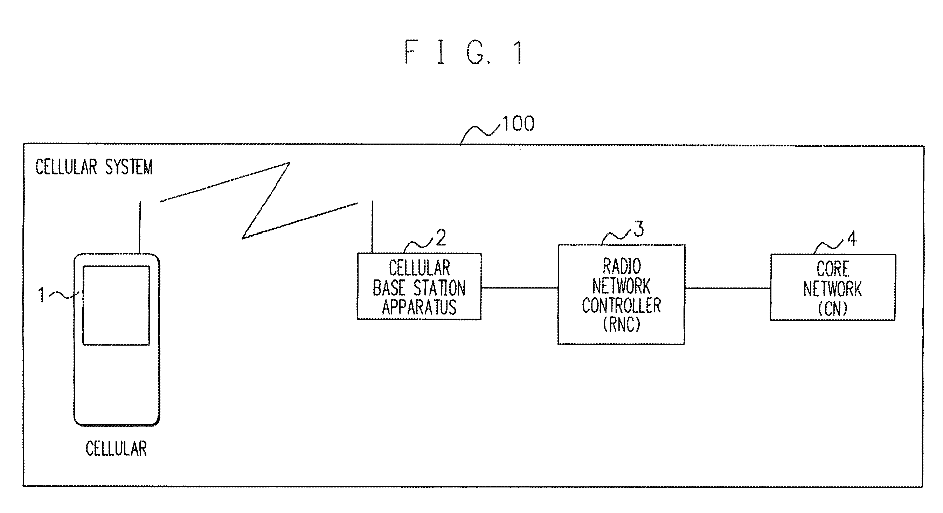

Next, description will be given of an exemplary embodiment of the present invention by referring to drawings. FIG. 1 is a block diagram showing a configuration example of a mobile communication system according to an exemplary embodiment of the present invention. In FIG. 1, a cellular system is shown as a mobile communication system, namely, a system configuration example of International Mobile Telecommunications-200 (IMT-200) Wideband-Code Division Multiple Access (W-CDMA).

In FIG. 1, the cellular system 100 includes a cellular 1, a cellular base station apparatus 2, a Radio Network Controller (RNC) 3, and a Core Network (CN) 4.

In the cellular system 100, the cellular 1 of a user, the cellular base station apparatus 2, and the radio network controller 3 to generally control the cellular base station apparatus 2 are connected to each other. Also, the radio network controller 3 is connected to the core network 4 for controlling position registration and call and managing user information. A range which the cellular base station apparatus 2 can cover is referred as a cell.

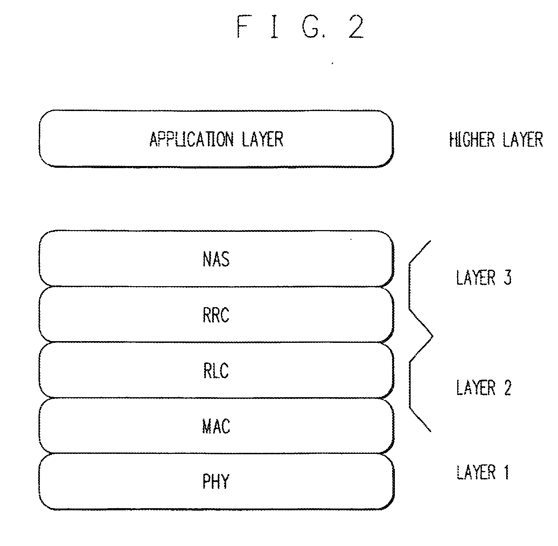

FIG. 2 is a diagram showing a protocol architecture of the radio interface employed in the exemplary embodiment of the present invention. FIG. 2 shows a protocol architecture of the radio interface assumed in a system of W-CDMA.

A Radio Resource Control (RRC) to control radio resources is connected to a Radio Link Layer (RLC) for providing a data transmission service to a higher layer, a Medium Access Controller (MAC) for conducting logical channel transmission and allocating a radio resource to RLC, and a PHYsical layer (PHY) for measuring radio transmission, radio quality, and the like via a transport channel.

Since the notification information is a message for RRC (layer 3) control, if "System information block type 5" (or "system information block type 5bis") includes an HSDPA cell indicator or an E-DCH cell indicator indicating that the cellular is locating in a cell supporting HSDPA or E-DCH, the information is transferred from the RRC to an application layer to be notified to the user of the cellular 1 in the form of pictograph display on the screen.

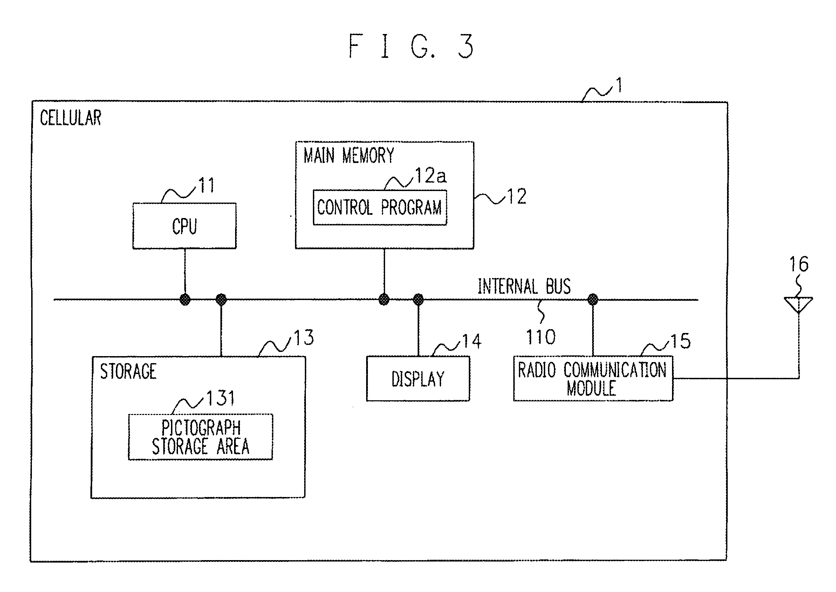

FIG. 3 is a block diagram showing a configuration example of the cellular 1 of FIG. 1. In FIG. 3, the cellular 1 includes a Central Processing Unit (CPU) 11, a main memory 12 for storing a control program 12a which the CPU 11 is to execute, a storage 13 which the CPU 11 uses as a work area or the like to execute the control program 12a, a display 14, a radio communication module 15, and an antenna 16.

The storage 13 includes a pictograph storage area 131 which stores data of pictograph (drawings using pictorial symbols or pictures) for indicating remaining battery power, a wave receiving state, an event in which the user is locating in a cell supporting HSDPA, an event in which the user is locating in a cell supporting E-DCH, and the like. Incidentally, in the cellular 1, the CPU 11, the main memory 12, the storage 13, the display 14, and the radio communication module 15 are respectively connected to an internal bus 110. Furthermore, FIG. 3 shows only elements of the cellular 1 associated with the present invention, and other elements such as an audio input/output module are not shown.

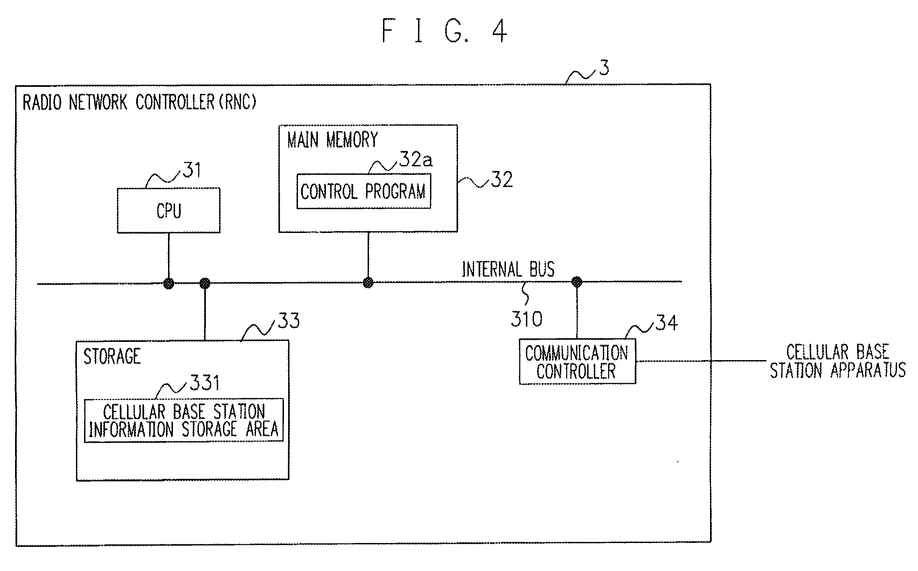

FIG. 4 is a block diagram showing a structure example of the radio network controller 3 of FIG. 1. In FIG. 4, the radio network controller 3 includes a CPU 31, a main memory 32 for storing a control program 32a which the CPU 31 is to execute, a storage 33 which the CPU 31 uses as a work area or the like to execute the control program 32a, and a communication controller 34.

The storage 33 includes a cellular base station information storage area 331 which stores at least cellular base station information indicating whether the cellular base station apparatus 2 corresponds to HSDPA or E-DCH. Incidentally, in the radio network controller 3, the CPU 31, the main memory 32, the storage 33, and the communication controller 34 are respectively connected to an internal bus 310. Moreover, FIG. 4 shows only elements of the radio network controller 3 associated with the present invention, and other elements for such as position registration processing of the cellular 1, processing for results of measurement of radio environments of the cellular 1, and the like are not shown.

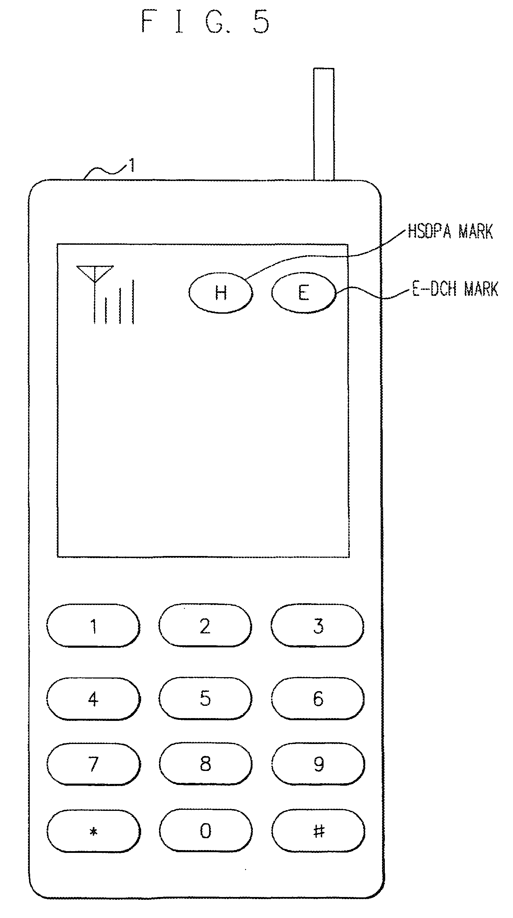

FIG. 5 is a diagram showing a pictograph example for the cellular 1 of FIG. 1, the example including an event in which the cellular is locating in a cell supporting HSDPA and an event in which the cellular is locating in a cell supporting E-DCH. In FIG. 5, the event in which the cellular is locating in a cell supporting HSDPA is represented using a combination of "H" and an ellipse and the event in which the cellular is locating in a cell supporting E-DCH is represented using a combination of "E" and an ellipse.

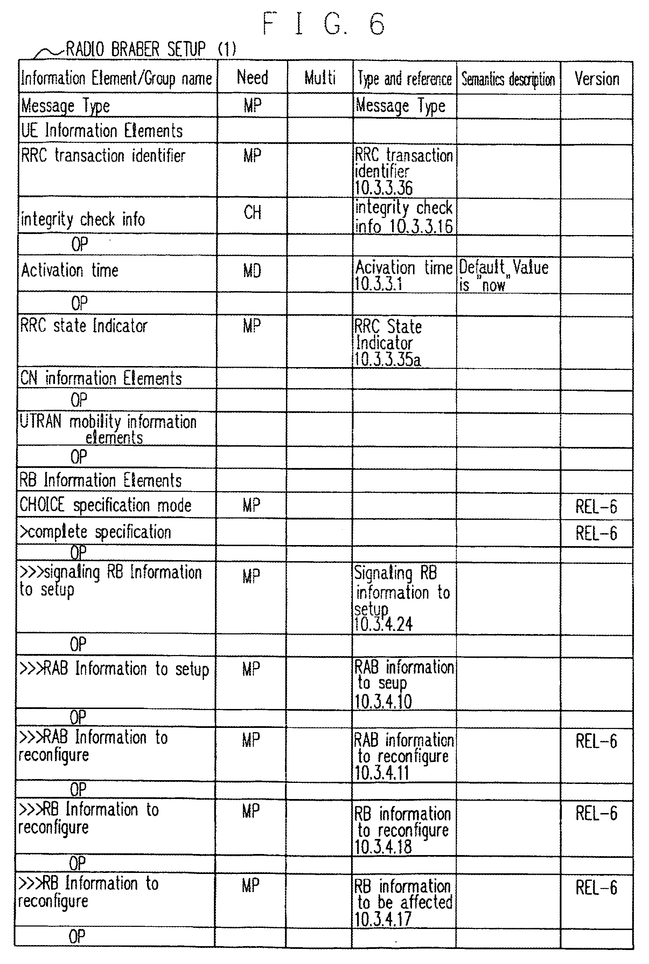

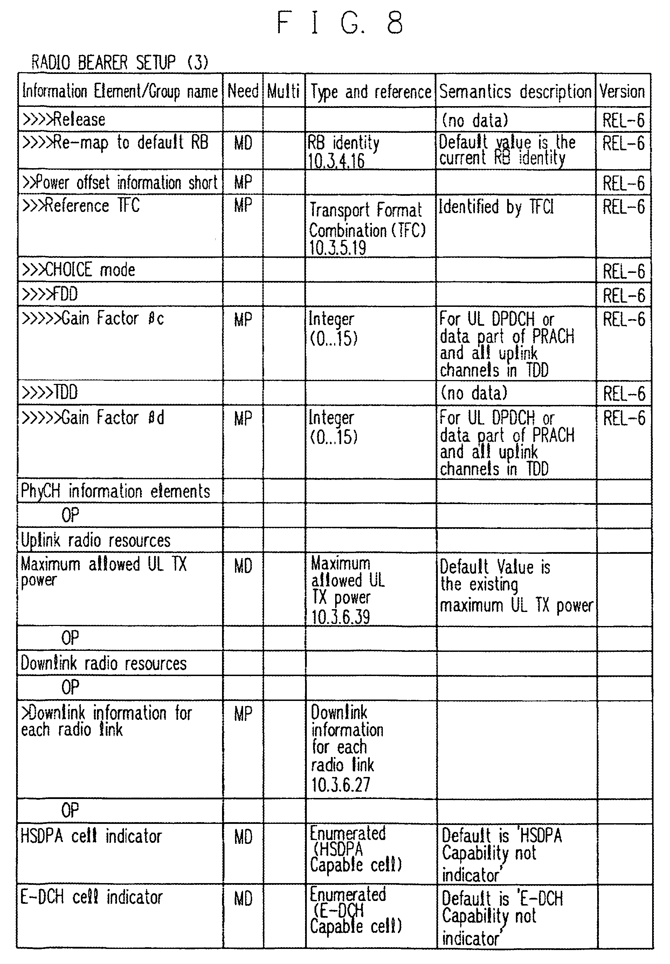

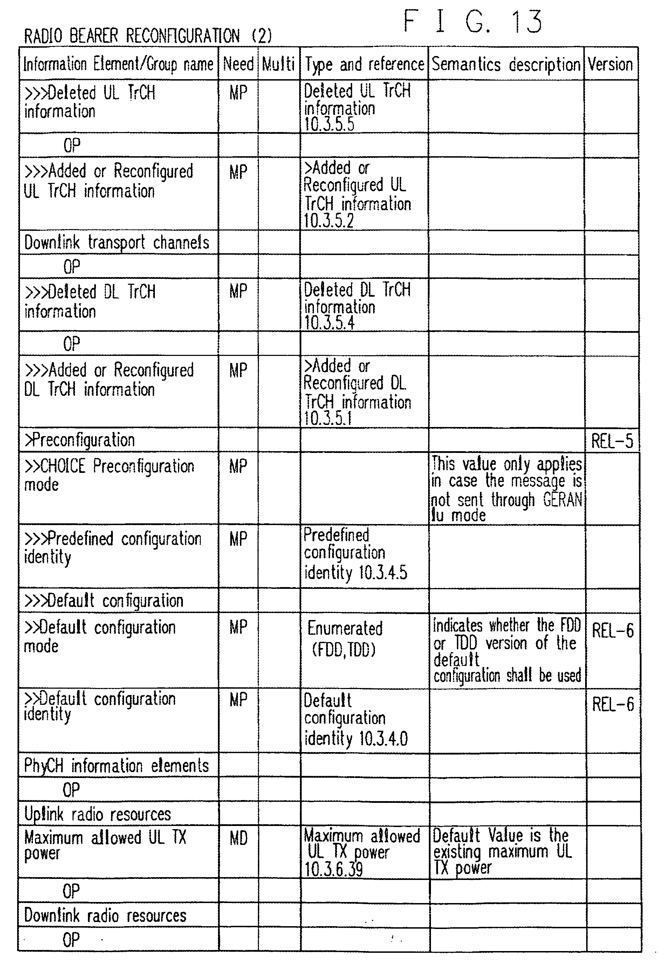

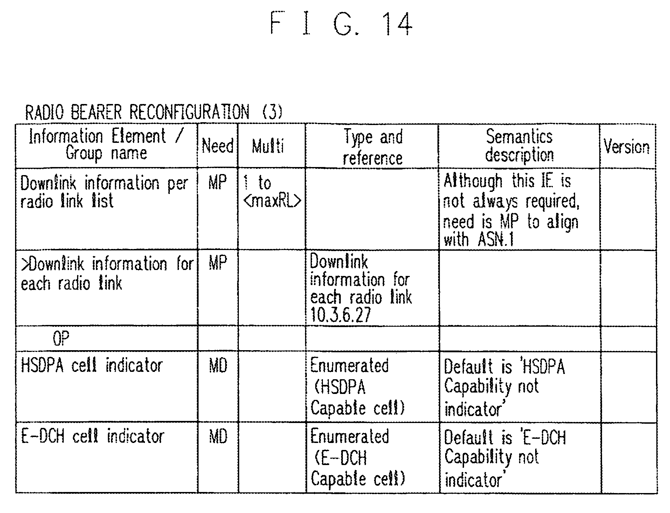

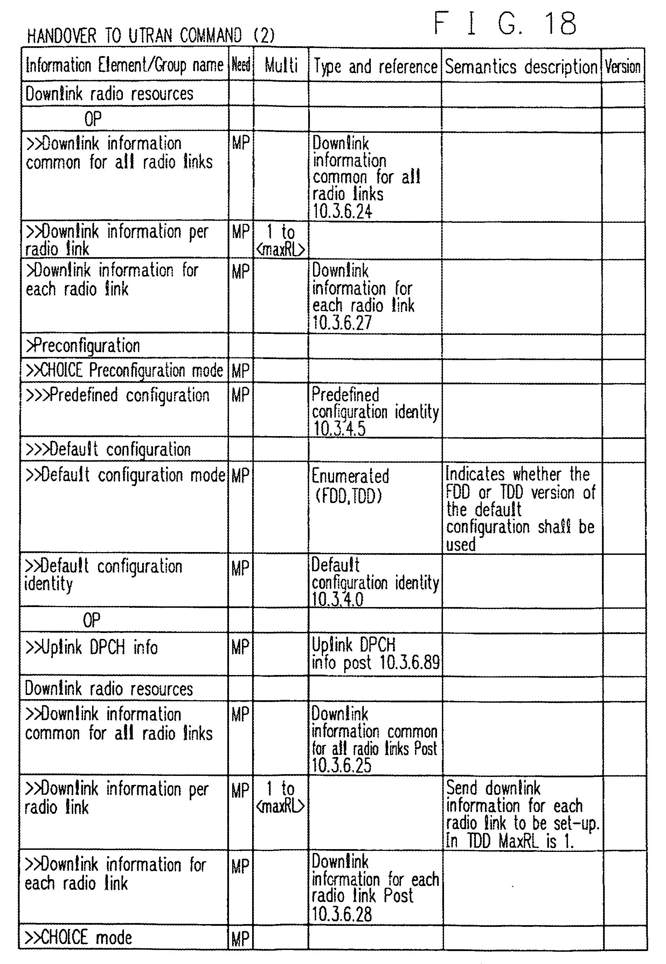

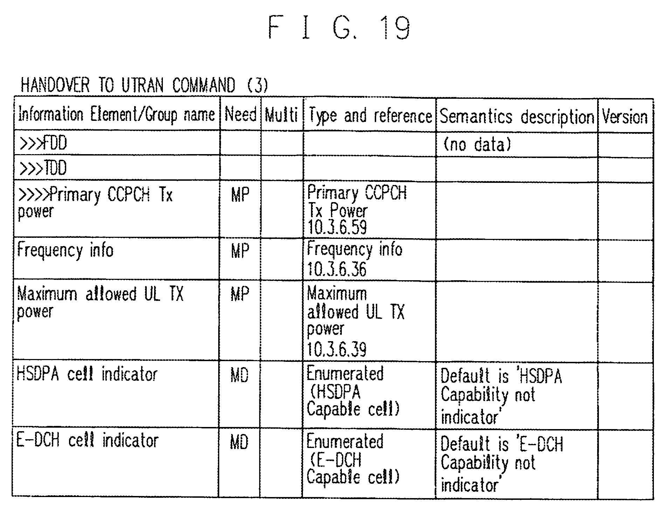

FIGS. 6 to 20 are diagrams showing format examples of the reconfiguration message in the exemplary embodiment of the present invention. In FIGS. 6 to 20, according to the exemplary embodiment, an HSDPA cell indicator is incorporated in the reconfiguration message, as information of an event in which the cellular is locating in a cell supporting HSDPA and an E-DCH cell indicator is incorporated in the reconfiguration message, as information of an event in which the cellular is locating in a cell supporting E-DCH.

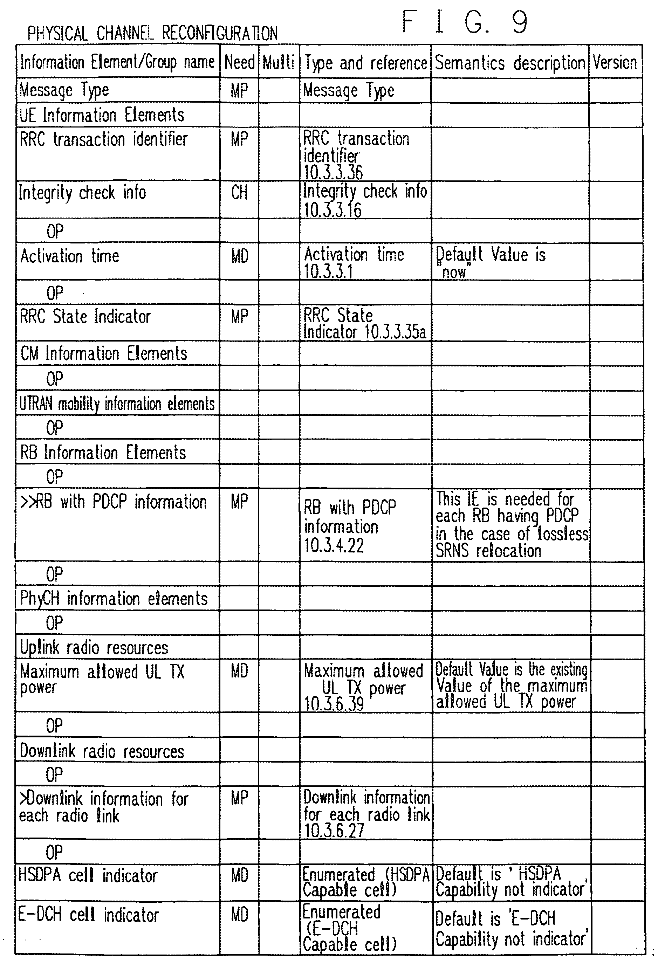

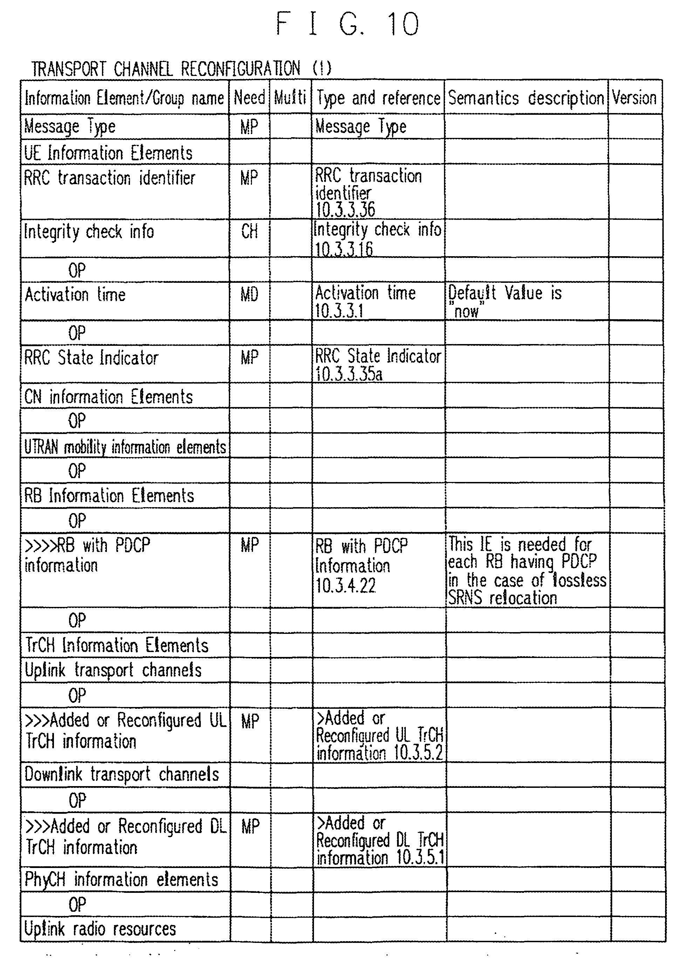

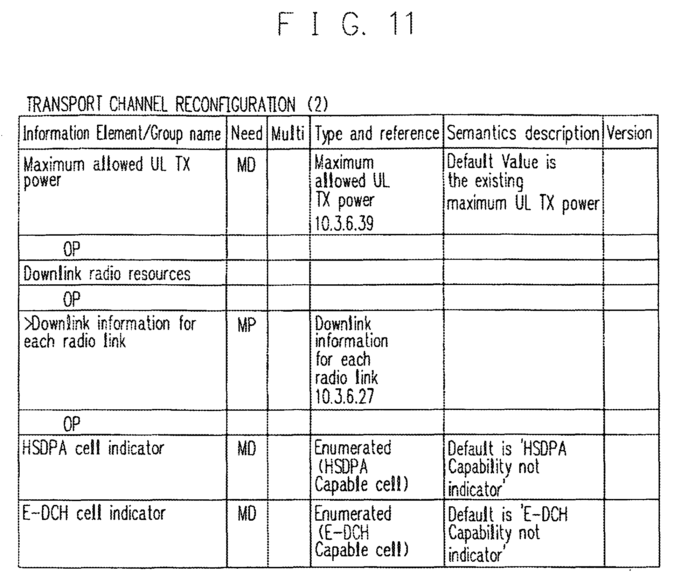

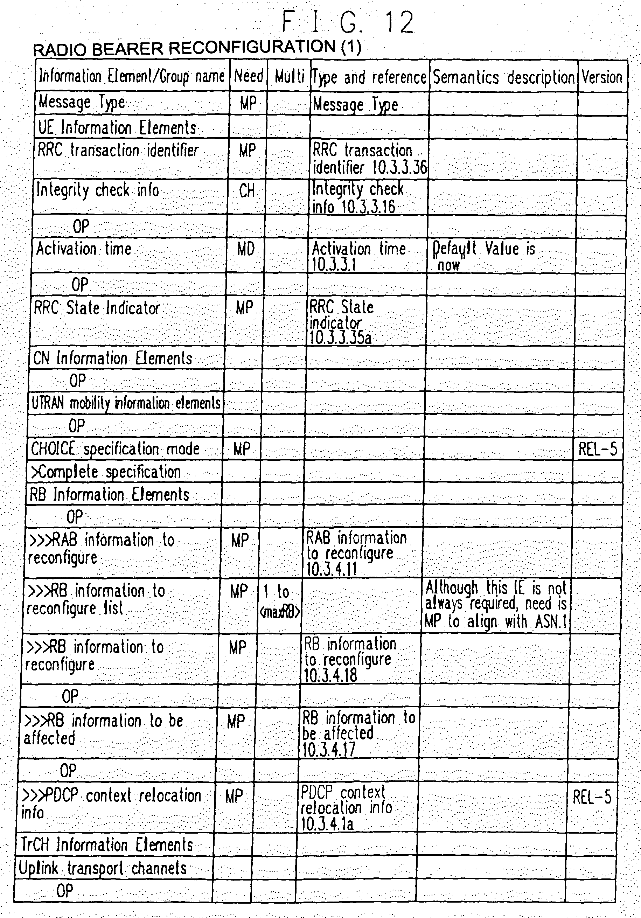

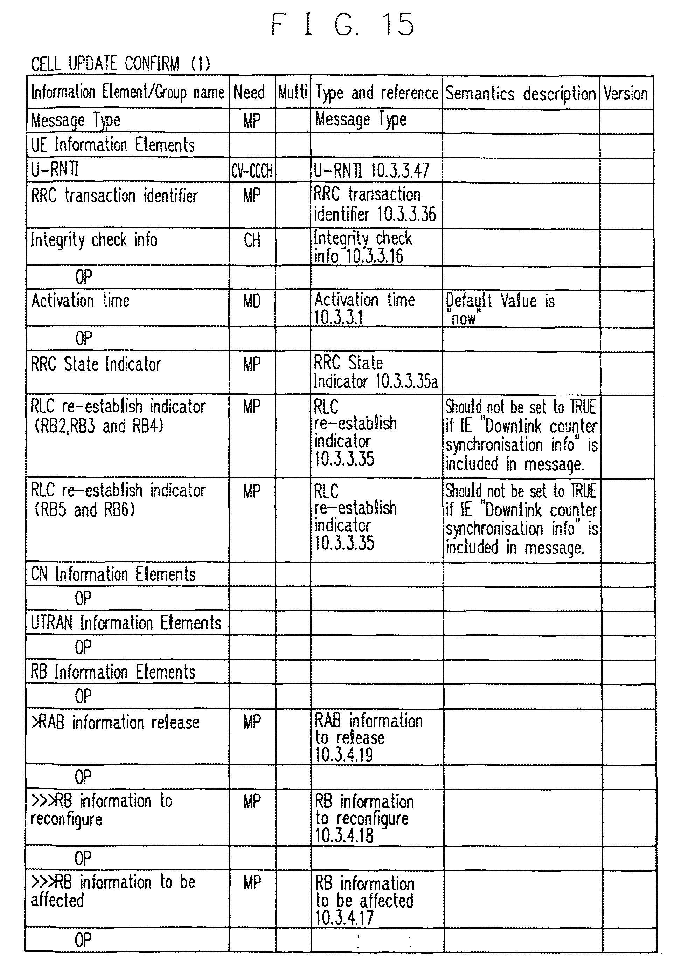

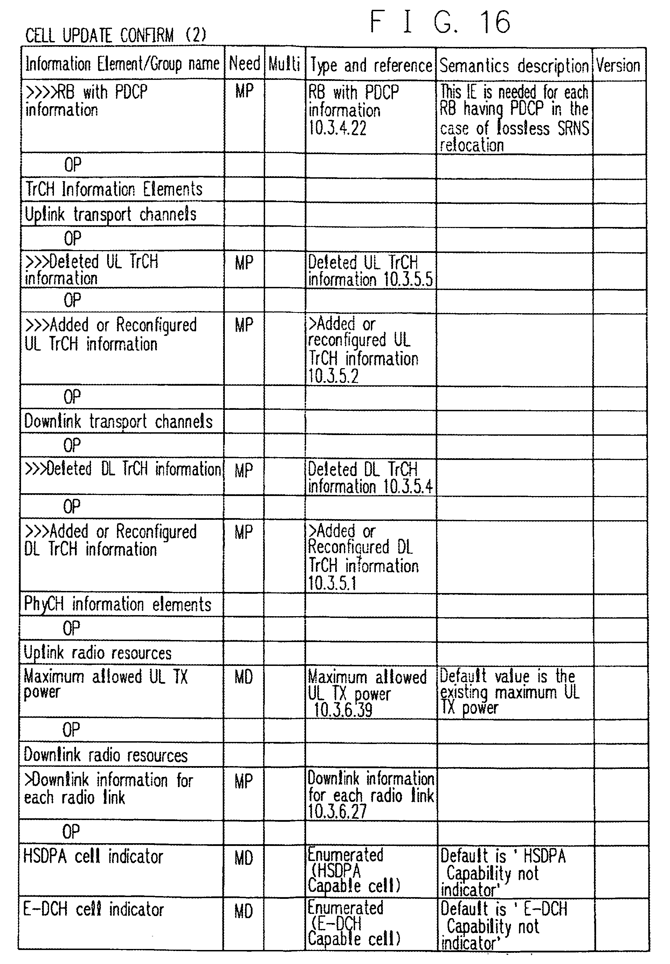

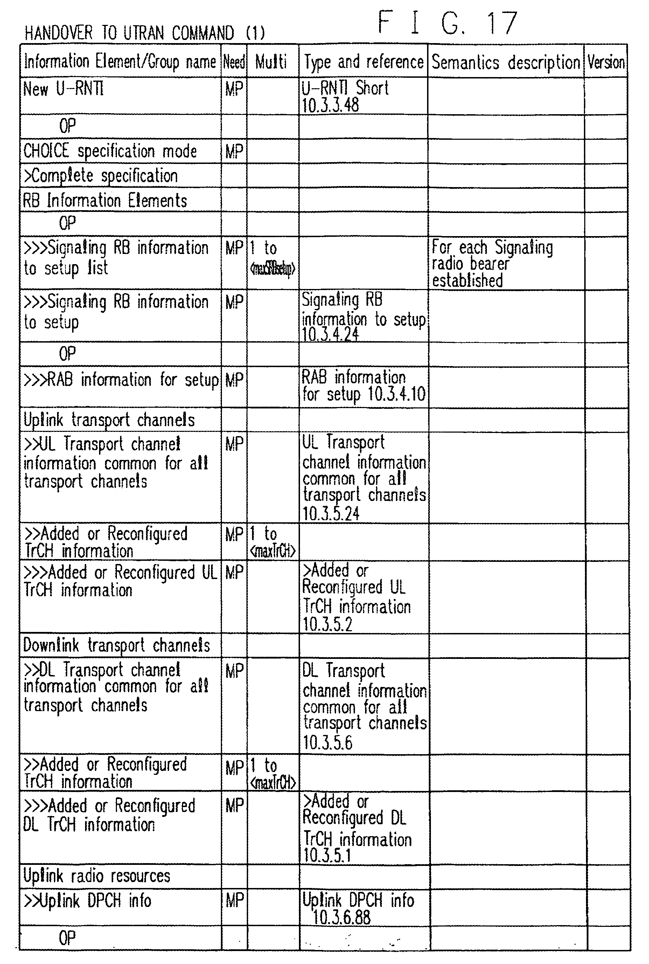

FIGS. 6 to 8 show format examples of "radio bearer setup", FIG. 9 shows a format example of "physical channel reconfiguration", FIGS. 10 and 11 show format examples of "transport channel reconfiguration", FIGS. 12 to 14 show format examples of "radio bearer reconfiguration", FIGS. 15 and 16 show format examples of "cell update confirm", and FIGS. 17 to 19 show format examples of "handover to utran command".

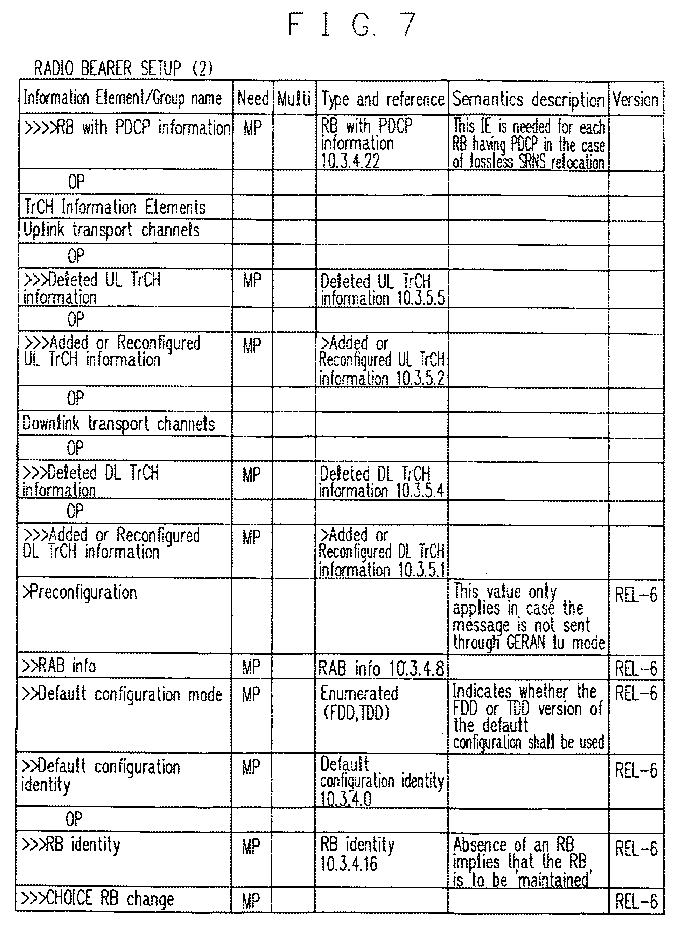

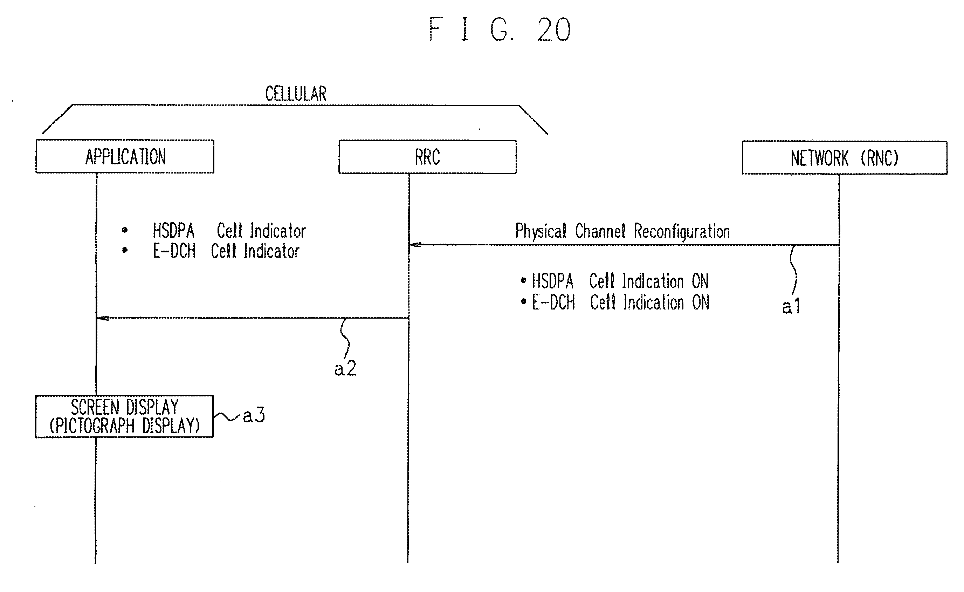

FIGS. 20 to 23 are sequence charts to explain a locating cell display method of a cellular system in accordance with the exemplary embodiment of the present invention. Referring to these figures 1 to 10, description will be given of the locating cell display method of the cellular system in accordance with the exemplary embodiment of the present invention. Incidentally, processing of the cellular 1 and the radio network controller 3 shown in FIGS. 7 to 10 is implemented when the CPUs 11 and 31 respectively of the cellular 1 and the radio network controller 3 execute the control programs 12a and 32a.

In the mobile communication system, as an indicator to determine whether the user is currently locating in a cell supporting HSDPA or E-DCH, an HSDPA cell indicator and an E-DCH cell indicator are notified to the user by the notification information ("system information block type 5" or "system information block type 5bis"; reference is to be made to Non-Patent Document 1 described above).

The cellular 1 recognizes the indicator and displays on the screen of the display 14 an event in which the user is locating in a cell supporting HSDPA or E-DCH to thereby notify the situation to the user.

However, the cellular 1 cannot receive the notification information when it is using a dedicated channel (Dedicated Channel (DCH)); hence, when the cellular 1 moves to another cell while keeping the dedicated channel by, for example, a handover, the cellular 1 cannot determine whether the cell as a destination is a cell supporting HSDPA or E-DCH and hence cannot display appropriate pictograph on the screen of the display 14.

The exemplary embodiment conducts operation as follows to solve the above problem. First, description will be given of a situation wherein, for example, the cellular 1 moves to another cell while keeping the individual channel by a handover.

When a handover of the cellular 1 is notified from the cellular base station apparatus 2 as the handover source, the radio network controller 3 reads cellular base station information of a cellular base station apparatus 2 as a handover destination which the cellular base station information storage area 331 to determine whether the cellular base station apparatus 2 corresponds to HSDPA or E-DCH.

If it is determined that the cellular base station apparatus 2 as the destination corresponds to HSDPA and E-DCH, the radio network controller 3 notifies "HSDPA cell indicator on" and "E-DCH cell indicator on" to the cellular 1 by use of "physical channel reconfiguration" (a1 of FIG. 20).

In the cellular 1, at reception of "physical channel reconfiguration", RRC extracts "HSDPA cell indicator" and "E-DCH cell indicator" to transmit the extracted result to the application (a2 of FIG. 20).

Since "HSDPA cell indicator on" and "E-DCH cell indicator on" are indicated, the application of the cellular 1 reads out pictograph data from the pictograph storage area 131 to display an event in which the cellular 1 is locating in a cell supporting HSDPA and an event in which the cellular 1 is locating in a cell supporting E-DCH and displays (pictograph) on the screen of the display 14 (a3 of FIG. 20).

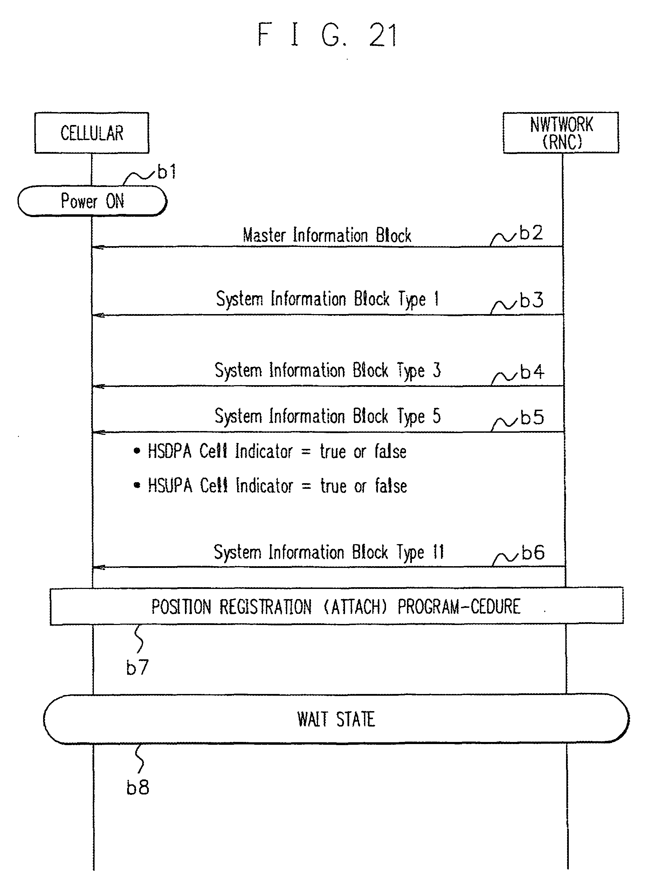

Next, referring to FIG. 21, description will be given of a case wherein "HSDPA cell indicator" and "E-DCH cell indicator" are notified by use of the notification information ("system information block type 5" or "system information block type 5bis")

When the user turns on the switch of the cellular 1 (power on; b1 of FIG. 21), the cellular 1 receives, via the notification information, information necessary to set up communication such as shared channel setup information and information to measure peripheral cells; after the information is completely received (b2 to b6 of FIG. 21), the cellular 1 issues a request to the network for position registration [position registration (attach) program-cedure] (b7 of FIG. 21). Thereafter, the cellular 1 enters a waiting state (b8 of FIG. 21).

In this situation, the information necessary for communication setup includes "master information block" (b2 of FIG. 21), "system information block type 1" (b3 of FIG. 21), "system information block type 3" (b4 of FIG. 21), "system information block type 5 (·HSDPA cell indicator = true or false, ·HSUPA cell indicator = true or false" (b5 of FIG. 21), and "system information block type 11" (b6 of FIG. 21).

In an operation to receive such notification information, when "system information block type 5(bis)" is received and if "true" is set to " HSDPA cell indicator", the cellular 1 conducts pictograph display of "the cellular is locating in a cell supporting HSDPA" on the screen of the display 14; if "true" is set to "E-DCH cell indicator", the cellular 1 conducts pictograph display of "the cellular is locating in a cell supporting E-DCH (HSUPA)" on the screen of the display 14. Incidentally, "HSDPA cell indicator" and "E-DCH cell indicator" can be independently operated.

The notification information can be received not only when the cellular is turned on, but also at a required point, for example, in a waiting state and when the cellular moves to another cell while communicating via a shared channel. Since the notification information is information to be notified for each cell, if the notification information can be received, the cellular 1 (user) can determine whether the locating cell is a cell supporting HSDPA or HSUPA.

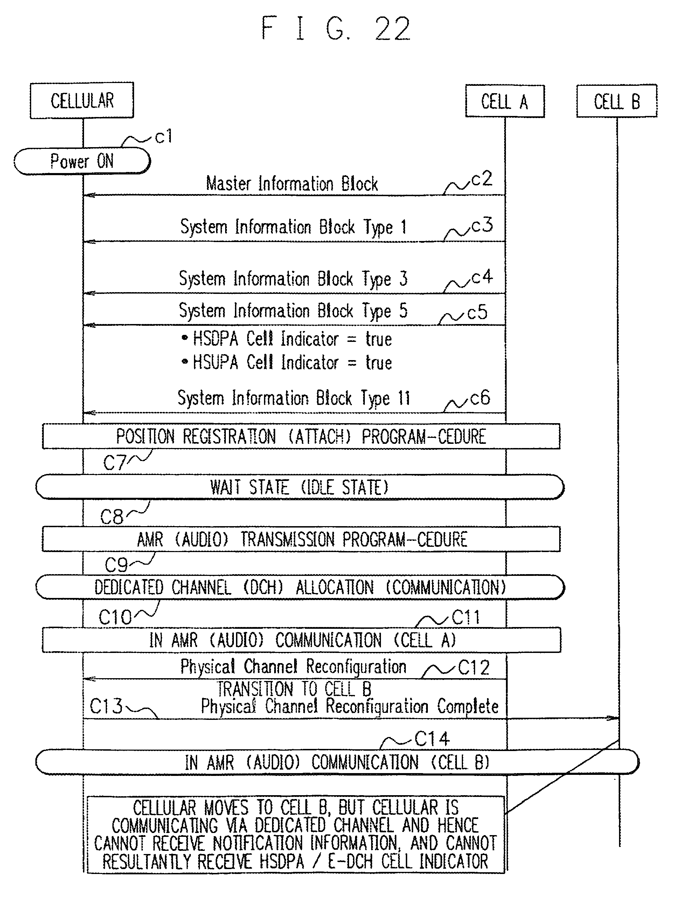

However, the notification information cannot be received during the communication via a dedicated channel; hence, when the cellular moves to another cell by a handover or the like while communicating via a dedicated channel, the notification information cannot be received in the cell of the destination; consequently, the cellular can receive neither "HSDPA cell indicator" nor "HSDPA cell indicator" of "system information block type 5(bis)" (reference is to be made to c1 to c13 of FIG. 22).

That is, when the user turns on the switch of the cellular 1 (power on; c1 of FIG. 22), the cellular 1 receives, via the notification information, information necessary to set up communication such as shared channel setup information and information to measure peripheral cells; after the information is completely received (c2 to c6 of FIG. 22), the cellular 1 issues a request to the network (radio network controller 3) for position registration [position registration (attach) program-cedure] (c7 of FIG. 22). Thereafter, the cellular 1 enters a waiting state (idle state; c8 of FIG. 22).

In this situation, the information necessary for communication setup includes "master information block" (c2 of FIG. 22), "system information block type 1" (c3 of FIG. 22), "system information block type 3" (c4 of FIG. 22), "system information block type 5 (·HSDPA cell indicator = true, ·HSUPA cell indicator = true" (c5 of FIG. 22), and "system information block type 11" (c6 of FIG. 22).

Thereafter, the cellular 1 conducts an Adaptive Multi Rate (AMR) (audio) transmission program-cedure (c9 of FIG. 22), dedicated channel (DCH:DCH) allocation (communication; c10 of FIG. 22), and "in AMR (audio) communication (cell A)" (c11 or FIG. 22) in cell A; when the cellular 1 receives "physical channel reconfiguration (c12 of FIG. 22) and conducts a transition to cell B, the cellular 1 returns "physical channel reconfiguration complete" (c13 of FIG. 22) and then conducts "in AMR (audio) communication (cell B)" (c14 or FIG. 22).

Although the cellular 1 conducts a transition to cell B, since it is communicating via a dedicated channel, the notification information cannot be received; resultantly, the HSDPA/E-DCH cell indicator cannot be received.

In the exemplary embodiment, to solve the above problem, it is assumed that each reconfiguration message is notified to the cellular 1 with "HSDPA cell indicator" and "E-DCH cell indicator" included therein (reference is to be made to FIG. 6). The reconfiguration message is a general term indicating messages to be notified from the network (radio network controller 3) to the cellular 1 to designate a handover in a situation wherein the transition of the state of the cellular 1 (RRC) is carried out or a parameter change is conducted for a radio channel, such as a physical channel, a transport channel, a logical channel.

At present, the reconfiguration messages prescribed by 3GPP include "radio bearer setup" (reference is to be made to FIGS. 6 to 8), "physical channel reconfiguration" (reference is to be made to FIG. 9), "transport channel reconfiguration (reference is to be made to FIGS. 10 and 11), "radio bearer reconfiguration" (reference is to be made to FIGS. 12 to 14), "cell update confirm" (reference is to be made to FIGS. 15 and 16), and "handover to Universal Terrestrial Radio Access Network (UTRAN) command" (reference is to be made to FIGS. 17 to 19).

To insert the information items of "HSDPA cell indicator" and "E-DCH cell indicator" in each reconfiguration message described above, a message extension is required. However, in the description of Abstract Syntax Notation. 1 (ASN.1), by adding the information items in the form of extension, the message extension can be carried out while keeping backward compatibility.

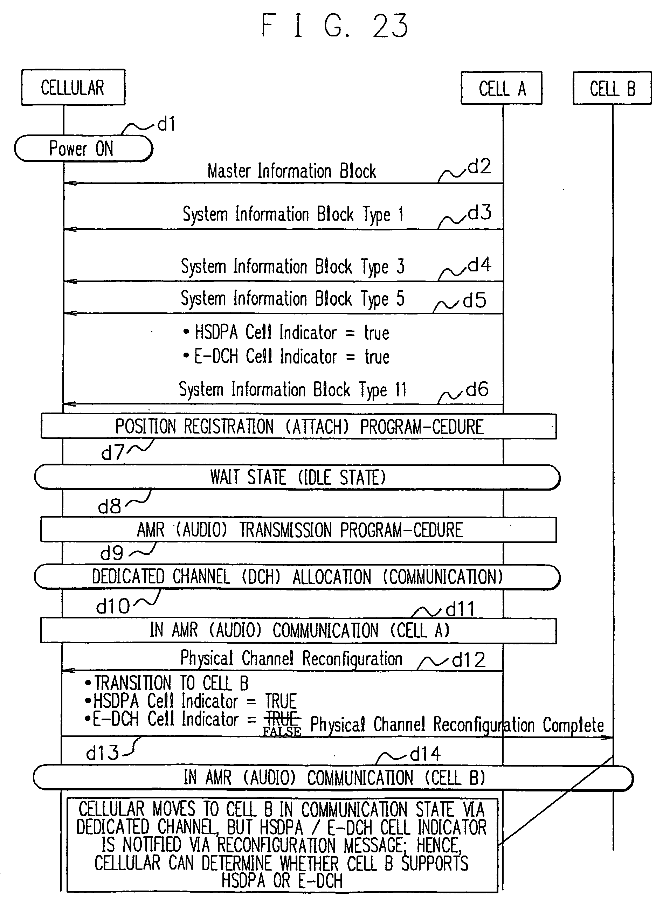

FIG. 23 shows a sequence when the message extension of "HSDPA cell indicator" and "E-DCH cell indicator" is additionally carried out as described above. In FIG. 23, when the cellular 1 in communication via a dedicated channel is moved from cell A to cell B, it is possible in the exemplary embodiment to recognize "HSDPA cell indicator" and "E-DCH cell indicator" in cell B according to "physical channel reconfiguration message (d12 and d13 of FIG. 23); resultantly, it is possible to display, on the screen of the display 14 of the cellular 1, pictograph indicating whether or not the locating cell is a cell supporting HSDPA or E-DCH (HSUPA).

That is, when the user turns on the switch of the cellular 1 (power on; d1 of FIG. 23), the cellular 1 receives, via the notification information, information necessary to set up communication such as shared channel setup information and information to measure peripheral cells; after the information is completely received (d2 to d6 of FIG. 23), the cellular 1 issues a request to the network (radio network controller 3) for position registration [position registration (attach) program-cedurel (d7 of FIG. 23). Thereafter, the cellular 1 enters a waiting state (idle state; d8 of FIG. 23).

In this situation, the information necessary for communication setup includes "master information block" (d2 of FIG. 23), "system information block type 1" (d3 of FIG. 23), "system information block type 3" (d4 of FIG. 23), "system information block type 5 (·HSDPA cell indicator = true, ·E-DCH cell indicator = true" (d5 of FIG. 23), and "system information block type 11" (d6 of FIG. 23).

Thereafter, the cellular 1 conducts an AMR (audio) transmission program-cedure (d9 of FIG. 23), dedicated channel (DCH) allocation (communication; d10 of FIG. 23), and "in AMR (audio) communication (cell A)" (d11 or FIG. 23) in cell A; thereafter, when the cellular 1 receives "physical channel reconfiguration (·transition to cell B, ·HSDPA cell indicator = true, ·E-DCH cell indicator = false)" (d12 of FIG. 23), the cellular 1 returns "physical channel reconfiguration complete" (d13 of FIG. 23) and then conducts "in AMR (audio) communication (cell B)" (d14 or FIG. 23).

Although the cellular 1 conducts a transition to cell B in the state of communication via a dedicated channel, "HSDPA/E-DCH cell indicator" is notified via the reconfiguration message; hence it is possible to determine whether or not cell B is a cell supporting HSDPA or E-DCH.

The exemplary embodiment utilizes the HSDPA and E-DCH (HSUPA) cell indicators; however, the cell indicators may be used not only for HSDPA and E-DCH (HSUPA) services, but also for an operation to notify service corresponding information of each cell from the network to the cellular 1 (user).

This application is based upon and claims the benefit of priority from Japanese patent application No. 2006-222966, filed on August 23, 2006.

### DESCRIPTION OF REFERENCE NUMERAL

- 1: Cellular
- 2: Cellular base station apparatus
- 3: Radio network controller
- 4: Core network
- 11, 31: CPU
- 12, 32: Main memory
- 12a, 32a: Control program
- 13, 33: Storage
- 14: Display
- 15: Radio communication module
- 16: Antenna
- 34: Communication controller
- 100: Cellular system
- 110, 310: Internal bus

## Claims

1. A mobile communication system comprising:
a base station apparatus (2) which is configured to notify a cellular (1), by use of notification information, of information items of a High Speed Downlink Packet Access HSDPA cell indicator and an Enhanced-Dedicated Channel E-DCH cell indicator which indicate that a cell under control of the base station apparatus (2) supports HSDPA and E-DCH respectively; and
a radio network controller (3) which is configured to determine whether a handover destination cell supports HSDPA or E-DCH when a handover of the cellular (1), which is in a state of communication via a dedicated channel, is notified, and to notify the cellular (1) under the handover of information about HSDPA and E-DCH supported in the handover destination cell by use of a reconfiguration message in which information items of the HSDPA cell indicator and the E-DCH cell indicator are added,
wherein the cellular (1) which has received the reconfiguration message is configured to extract the information items of the HSDPA cell indicator and the E-DCH cell indicator, and to display information relating to the extracted indicator on a screen.

2. The mobile communication system in accordance with claim 1, wherein the reconfiguration message includes a message to be notified from a network to the cellular at least when designating a handover, a transition of a state of the cellular is carried out, a parameter change is conducted for a radio channel including at least a physical channel, a transport channel, and a logical channel.

3. The mobile communication system in accordance with claim 2, wherein the reconfiguration message includes any of messages of "radio bearer setup", "physical channel reconfiguration", transport channel reconfiguration", "radio bearer reconfiguration", "cell update confirm" and "handover to Universal Terrestrial Radio Access Network UTRAN" prescribed by 3^{rd} Generation Partnership Project 3GPP, and the information items of the HSDPA cell indicator and the E-DCH cell indicator are added in the form of extension.

4. A radio network controller (3) which is configured to control a base station apparatus (2) in a mobile communication system in which the base station apparatus (2) notifies a cellular (1), by use of notification information, of information items of a High Speed Downlink Packet Access HSDPA cell indicator and an Enhanced-Dedicated Channel E-DCH cell indicator which indicate that a cell under control of the base station apparatus (2) supports HSDPA and E-DCH respectively, comprising:
means which is configured to determine whether a handover destination cell supports HSDPA or E-DCH when a handover of the cellular (1), which is in a state of communication via a dedicated channel, is notified; and
means which is configured to notify the cellular (1) under the handover of information about HSDPA and E-DCH supported in the handover destination cell by use of a reconfiguration message in which information items of the HSDPA cell indicator and the E-DCH cell indicator are added, in order the cellular (1) which receives the reconfiguration message to extract the information items of the HSDPA cell indicator and the E-DCH cell indicator, and to display information relating to the extracted indicator on a screen.

5. The radio network controller in accordance with claim 4, wherein the reconfiguration message includes a message to be notified from a network to the cellular at least when designating a handover, a transition of a state of the cellular is carried out, a parameter change is conducted for a radio channel including at least a physical channel, a transport channel, and a logical channel.

6. The radio network controller in accordance with claim 5, wherein the reconfiguration message includes any of messages of "radio bearer setup", "physical channel reconfiguration", "transport channel reconfiguration", "radio bearer reconfiguration", "cell update confirm" and "handover to Universal Terrestrial Radio Access Network UTRAN" prescribed by 3^{rd} Generation Partnership Project 3GPP, and the information items of the HSDPA cell indicator and the E-DCH cell indicator are added in the form of extension.

7. A cellular (1) to which, by use of notification information from a base station apparatus (2), information items of a High Speed Downlink Access HSDPA cell indicator and an Enhanced-Dedicated Channel E-DCH cell indicator which indicate that a cell under control of the base station apparatus (2) supports HSDPA and E-DCH respectively is notified, comprising:
means which is configured to receive a reconfiguration message which the information items of the HSDPA cell indicator and the E-DCH cell indicator of a handover destination cell are added and is notified from a radio network controller (3) which has determined whether the handover destination cell supports HSDPA or E-DCH when a handover of the cellular (1), which is in a state of communication via a dedicated channel, is notified;
means which is configured to extract the information items of the HSDPA cell indicator and the E-DCH cell indicator added to the reconfiguration message notified from the radio network controller (3); and
means which is configured to display information relating to the extracted indicator on a screen.

8. The cellular in accordance with claim 7, wherein the reconfiguration message includes a message to be notified from a network to the cellular at least when designating a handover, a transition of a state of the cellular is carried out, a parameter change is conducted for a radio channel including at least a physical channel, a transport channel, and a logical channel.

9. The cellular in accordance with claim 8, wherein the reconfiguration message includes any of messages of "radio bearer setup", ""physical channel reconfiguration", transport channel reconfiguration", "radio bearer reconfiguration", "cell update confirm"" and "handover to Universal Terrestrial Radio Access Network UTRAN" prescribed by 3^{rd} Generation Partnership Project 3GPP, and the information items of the HSDPA cell indicator and the E-DCH cell indicator are added in the form of extension.

10. A locating cell display method for use with a mobile communication system in which a base station apparatus (2) notifies a cellular (1), by use of notification information, of information items of a High Speed Downlink Access HSDPA cell indicator and an Enhanced Dedicated Channel E-DCH cell indicator which indicate that a cell under control of the base station apparatus (2) supports HSDPA and E-DCH respectively, comprising:
determining in a radio network controller (3) whether a handover destination cell supports HSDPA or E-DCH when a handover of the cellular (1), which is in a state of communication via a dedicated channel, is notified;
notifying the cellular (1) under the handover of information about HSDPA and E-DCH supported in the handover destination cell by use of a reconfiguration message in which information items of the HSDPA cell indicator and the E-DCH cell indicator are added from the radio network controller (3); and
extracting the information items of the HSDPA cell indicator and the E-DCH cell indicator in the cellular (1) from the reconfiguration message, and displaying information relating to the extracted indicator on a screen.

11. The locating cell display method in accordance with claim 10, wherein the reconfiguration message includes a message to be notified from a network to the cellular at least when designating a handover, a transition of a state of the cellular is carried out, a parameter change is conducted for a radio channel including at least a physical channel, a transport channel, and a logical channel.

12. The locating cell display method in accordance with claim 11, wherein the reconfiguration message includes any of messages of "radio bearer setup", "physical channel reconfiguration", transport channel reconfiguration", "radio bearer reconfiguration", "cell update confirm" and "handover to Universal Terrestrial Radio Access Network UTRAN" prescribed by 3^{rd} Generation Partnership Project 3GPP, and the information items of the HSDPA cell indicator and the E-DCH cell indicator are added in the form of extension.

## Patentansprüche

1. Ein mobiles Kommunikationssystem, aufweisend:
Eine Basisstationsvorrichtung (2), die konfiguriert ist, ein Mobiltelefon (1) zu benachrichtigen, durch Verwendung von Benachrichtigungsinformationen, über Informationselemente eines High Speed Downlink Packet Access HSDPA-Zellenindikators und eines Enhanced-Dedicated Channel E-DCH-Zellenindikators, der angibt, dass eine unter Kontrolle der Basisstationsvorrichtung (2) befindliche Zelle HSDPA und E-DCH jeweils unterstützt; und
einen Funknetzwerk-Controller (3), der konfiguriert ist, zu ermitteln, ob eine Handover Zielzelle HSDPA oder E-DCH unterstützt, wenn ein Handover des Mobiltelefons (1), das sich im Status einer Kommunikation via dediziertem Kanal befindet, benachrichtigt wird, und um das Mobiltelefon (1) zu benachrichtigen während des Handovers über Informationen über HSDPA und E-DCH, die in der Handover Zielzelle unterstützt werden, durch Verwendung einer Rekonfigurationsnachricht, in der Informationselemente des HSDPA-Zellenindikators und des E-DCH-Zellenindikators hinzugefügt sind,
wobei das Mobiltelefon (1), das die Rekonfigurationsnachricht empfangen hat, konfiguriert ist, die Informationselemente des HSDPA-Zellenindikators und des E-DCH-Zellenindikators zu extrahieren und Informationen bezogen auf den extrahierten Indikator auf einem Bildschirm anzuzeigen.

2. Das mobile Kommunikationssystem in Übereinstimmung mit Anspruch 1, wobei die Rekonfigurationsnachricht eine Nachricht einschließt, die von einem Netzwerk an das Mobiltelefon übermittelt werden soll, zumindest wenn ein Handover bestimmt wird, ein Übergang eines Status des Mobiltelefons ausgeführt wird, ein Parameterwechsel durchgeführt wird für einen Funkkanal einschließend von zumindest einem physikalischen Kanal, einem Transportkanal, und einem logischen Kanal.

3. Das mobile Kommunikationssystem nach Anspruch 2, wobei die Rekonfigurationsnachricht irgendeine Nachricht einschließt von "radio bearer setup"; "Rekonfiguration des physikalischen Kanals"; "Rekonfiguration des Transportkanals"; "Rekonfiguration des radio bearers"; "Bestätigung des Zellenupdates" und "Handover zum Universal Terrestrial Radio Access Network UTRAN", die beschrieben sind durch das 3^{rd} Generation Partnership Project 3GPP, und die Informationselemente des HSDPA-Zellenindikators und des E-DCH-Zellenindikators in Form von Extension hinzugefügt werden.

4. Ein Funknetzwerkcontroller (3), der konfiguriert ist, eine Basisstationsvorrichtung (2) in einem mobilen Kommunikationssystem zu steuern, bei dem die Basisstationsvorrichtung (2) ein Mobiltelefon (1) benachrichtigt durch Verwendung von Benachrichtigungsinformationen, über Informationselemente eines HSDPA-Zellenindikators und eines E-DCH-Zellenindikators, die angeben, dass eine Zelle unter Kontrolle der Basisstationsvorrichtung (2) jeweils HSDPA und E-DCH unterstützen, aufweisend:
Mittel, die konfiguriert sind, zu ermitteln, ob eine Handover Zielzelle HSDPA oder E-DCH unterstützt, wenn ein Handover des Mobiltelefons (1), das sich im Status von Kommunikation über einem dedizierten Kanal befindet, benachrichtigt wird; und
Mittel, die konfiguriert sind, um das Mobiltelefon (1) unter dem Handover von Information über HSDPA und E-DCH zu benachrichtigen, die in der Handover Zielzelle unterstützt werden, und zwar durch Verwendung einer Rekonfigurationsnachricht, bei der Informationselemente des HSDPA-Zellenindikators und des E-DCH-Zellenindikators hinzugefügt sind, damit das Mobiltelefon (1), das die Rekonfigurationsnachricht empfängt, die Informationselemente des HSDPA-Zellenindikators und des E-DCH-Zellenindikators extrahiert und Informationen bezüglich des extrahierten Indikators auf einem Schirm anzeigt.

5. Der Funknetzwerkcontroller nach Anspruch 4, wobei die Rekonfigurationsnachricht eine Nachricht einschließt, die von einem Netzwerk an das Mobiltelefon übermittelt werden soll, zumindest wenn ein Handover bestimmt wird, ein Übergang eines Status des Mobiltelefons ausgeführt wird, ein Parameterwechsel durchgeführt wird für einen Funkkanal einschließend von zumindest einem physikalischen Kanal, einen Transportkanal, und einen logischen Kanal.

6. Der Funknetzwerkcontroller nach Anspruch 5, wobei die Rekonfigurationsnachricht irgendeine Nachricht einschließt von "radio bearer setup"; "Rekonfiguration des physikalischen Kanals"; "Rekonfiguration des Transportkanals"; "Rekonfiguration des radio bearers"; "Bestätigung des Zellenupdates" und "Handover zum Universal Terrestrial Radio Access Network UTRAN", die beschrieben sind durch das 3^{rd} Generation Partnership Project 3GPP, und die Informationselemente des HSDPA-Zellenindikators und des E-DCH-Zellenindikators in Form von Extension hinzugefügt werden.

7. Ein Mobiltelefon (1) an das unter Verwendung von Benachrichtigungsinformationen von einer Basisstationsvorrichtung (2) Informationselemente eines HSDPA-Zellenindikators und eines E-DCH-Zellenindikators übermittelt werden, die angeben, dass eine Zelle unter Kontrolle der Basisstationsvorrichtung (2) HSDPA und E-DCH jeweils unterstützen, aufweisend:
Mittel, die konfiguriert sind, eine Rekonfigurationsnachricht zu empfangen, zu der die Informationselemente des HSDPA-Zellenindikators und des E-DCH-Zellenindikators einer Handover Zielzelle hinzugefügt sind und die benachrichtigt wird von einem Funknetzwerkcontroller (3), der ermittelt hat, ob die Handover Zielzelle HSDPA oder E-DCH unterstützt, wenn ein Handover des Mobiltelefons (1), das sich im Status von Kommunikation über einem dedizierten Kanal befindet, benachrichtigt wird;
Mittel, die konfiguriert sind, die Informationselemente des HSDPA-Zellenindikators und des E-DCH-Zellenindikators, die hinzugefügt sind zu der Rekonfigurationsnachricht, die übermittelt wird von dem Funknetzwerkcontroller (3), zu extrahieren; und
Mittel, die konfiguriert sind, Informationen bezüglich des extrahierten Indikators auf einem Bildschirm anzuzeigen.

8. Das Mobiltelefon nach Anspruch 7, wobei die Rekonfigurationsnachricht eine Nachricht einschließt, die von einem Netzwerk an das Mobiltelefon übermittelt werden soll, zumindest wenn ein Handover bestimmt wird, ein Übergang eines Status des Mobiltelefons ausgeführt wird, ein Parameterwechsel durchgeführt wird für einen Funkkanal einschließend von zumindest einem physikalischen Kanal, einen Transportkanal, und einen logischen Kanal.

9. Das Mobiltelefon nach Anspruch 8, wobei die Rekonfigurationsnachricht irgendeine Nachricht einschließt von "radio bearer setup"; "Rekonfiguration des physikalischen Kanals"; "Rekonfiguration des Transportkanals"; "Rekonfiguration des radio bearers"; "Bestätigung des Zellenupdates" und "Handover zum Universal Terrestrial Radio Access Network UTRAN", die beschrieben sind durch das 3^{rd} Generation Partnership Project 3GPP, und die Informationselemente des HSDPA-Zellenindikators und des E-DCH-Zellenindikators in Form von Extension hinzugefügt werden.

10. Ein Lokalisierungs-Zellen-Anzeigeverfahren zur Verwendung mit einem mobilen Kommunikationssystem, bei dem eine Basisstationsvorrichtung (2) ein Mobiltelefon (1) unter Verwendung von Benachrichtigungsinformationen informiert über Informationselemente eines HSDPA-Zellenindikators und eines E-DCH-Zellenindikators, die angeben, dass eine Zelle unter Kontrolle der Basisstationsvorrichtung (2) HSDPA und E-DCH jeweils unterstützt, aufweisend:
Ermitteln in einem Funknetzwerkcontroller (3) ob eine Handover Zielzelle HSDPA oder E-DCH unterstützt, wenn ein Handover des Mobiltelefons (1), das sich in einem Status der Kommunikation über einem dedizierten Kanal befindet, mitgeteilt wird;
Benachrichtigen des Mobiltelefons (1), das sich im Handover befindet, über Informationen über HSDPA und E-DCH, die unterstützt werden in der Handover Zielzelle, durch Verwendung einer Rekonfigurationsnachricht, in der Informationselemente des HSDPA-Zellenindikators und des E-DCH-Zellenindikators hinzugefügt sind, von dem Funknetzwerkcontroller (3); und
Extrahieren der Informationselemente des HSDPA-Zellenindikators und des E-DCH-Zellenindikators in dem Mobiltelefon (1) aus der Rekonfigurationsnachricht und Anzeigen von Informationen bezogen auf den extrahierten Indikator auf einem Bildschirm.

11. Das Lokalisierungs-Zellen-Anzeigeverfahren nach Anspruch 10, wobei die Rekonfigurationsnachricht eine Nachricht einschließt, die von einem Netzwerk an das Mobiltelefon übermittelt werden soll, zumindest wenn ein Handover bestimmt wird, ein Übergang eines Status des Mobiltelefons ausgeführt wird, ein Parameterwechsel durchgeführt wird für einen Funkkanal einschließend von zumindest einem physikalischen Kanal, einen Transportkanal, und einen logischen Kanal.

12. Das Lokalisierungs-Zellen-Anzeigeverfahren nach Anspruch 11, wobei die Rekonfigurationsnachricht irgendeine Nachricht einschließt von "radio bearer setup"; "Rekonfiguration des physikalischen Kanals"; "Rekonfiguration des Transportkanals"; "Rekonfiguration des radio bearers"; "Bestätigung des Zellenupdates" und "Handover zum Universal Terrestrial Radio Access Network UTRAN", die beschrieben sind durch das 3^{rd} Generation Partnership Project 3GPP, und die Informationselemente des HSDPA-Zellenindikators und des E-DCH-Zellenindikators in Form von Extension hinzugefügt werden.

## Revendications

1. Système de communication mobile comprenant :
un appareil station de base (2) qui est configuré pour notifier à un appareil cellulaire (1), en utilisant des informations de notification, des éléments d'informations d'un indicateur de cellule HSDPA (High Speed Downlink Packet Access) et d'un indicateur de cellule E-DCH (Enhanced-Dedicated Channel) qui indiquent qu'une cellule sous la commande de l'appareil station de base (2) prend en charge HSDPA et E-DCH, respectivement ; et
un contrôleur de réseau radio (3) qui est configuré pour déterminer si une cellule destination de transfert intercellulaire prend en charge HSDPA ou E-DCH lorsqu'un transfert intercellulaire de l'appareil cellulaire (1), qui est dans un état de communication par l'intermédiaire d'un canal dédié, est notifié, et pour notifier à l'appareil cellulaire (1) en cours de transfert intercellulaire des informations concernant HSDPA et E-DCH pris en charge dans la cellule destination de transfert intercellulaire en utilisant un message de reconfiguration dans lequel des éléments d'informations de l'indicateur de cellule HSDPA et de l'indicateur de cellule E-DCH sont ajoutés,
dans lequel l'appareil cellulaire (1) qui a reçu le message de reconfiguration est configuré pour extraire les éléments d'informations de l'indicateur de cellule HSDPA et de l'indicateur de cellule E-DCH, et pour afficher des informations concernant l'indicateur extrait sur un écran.

2. Système de communication mobile selon la revendication 1, dans lequel le message de reconfiguration comprend un message à notifier d'un réseau à l'appareil cellulaire au moins lors de la désignation d'un transfert intercellulaire, lorsqu'une transition d'un état de l'appareil cellulaire est effectuée, lorsqu'un changement de paramètre est exécuté pour un canal radio comprenant au moins un canal physique, un canal de transport et un canal logique.

3. Système de communication mobile selon la revendication 2, dans lequel le message de reconfiguration comprend l'un quelconque de messages « d'établissement de support radio », « de reconfiguration de canal physique », « de reconfiguration de canal de transport », « de reconfiguration de support radio », « de confirmation de mise à jour de cellule » et « de transfert intercellulaire vers UTRAN (Universal Terrestrial Radio Access Network) » prescrits par 3GPP (3^{rd} Generation Partnership Project), et les éléments d'informations de l'indicateur de cellule HSDPA et de l'indicateur de cellule E-DCH sont ajoutés sous la forme d'une extension.

4. Contrôleur de réseau radio (3) qui est configuré pour commander un appareil station de base (2) dans un système de communication mobile dans lequel l'appareil station de base (2) notifie à un appareil cellulaire (1), en utilisant des informations de notification, des éléments d'informations d'un indicateur de cellule HSDPA (High Speed Downlink Packet Access) et d'un indicateur de cellule E-DCH (Enhanced-Dedicated Channel) qui indiquent qu'une cellule sous la commande de l'appareil station de base (2) prend en charge HSDPA et E-DCH, respectivement, comprenant :
des moyens qui sont configurés pour déterminer si une cellule destination de transfert intercellulaire prend en charge HSDPA ou E-DCH lorsqu'un transfert intercellulaire de l'appareil cellulaire (1), qui est dans un état de communication par l'intermédiaire d'un canal dédié, est notifié ; et
des moyens qui sont configurés pour notifier à l'appareil cellulaire (1) en cours de transfert intercellulaire des informations concernant HSDPA et E-DCH pris en charge dans la cellule destination de transfert intercellulaire en utilisant un message de reconfiguration dans lequel des éléments d'informations de l'indicateur de cellule HSDPA et de l'indicateur de cellule E-DCH sont ajoutés, afin que l'appareil cellulaire (1) qui reçoit le message de reconfiguration extraie les éléments d'informations de l'indicateur de cellule HSDPA et de l'indicateur de cellule E-DCH, et affiche des informations concernant l'indicateur extrait sur un écran.

5. Contrôleur de réseau radio selon la revendication 4, dans lequel le message de reconfiguration comprend un message à notifier d'un réseau à l'appareil cellulaire au moins lors de la désignation d'un transfert intercellulaire, lorsqu'une transition d'un état de l'appareil cellulaire est effectuée, lorsqu'un changement de paramètre est effectué pour un canal radio comprenant au moins un canal physique, un canal de transport et un canal logique.

6. Contrôleur de réseau radio selon la revendication 5, dans lequel le message de reconfiguration comprend l'un quelconque de messages « d'établissement de support radio », « de reconfiguration de canal physique », « de reconfiguration de canal de transport », « de reconfiguration de support radio », « de confirmation de mise à jour de cellule » et « de transfert intercellulaire vers UTRAN (Universal Terrestrial Radio Access Network) » prescrits par 3GPP (3^{rd} Generation Partnership Project), et les éléments d'informations de l'indicateur de cellule HSDPA et de l'indicateur de cellule E-DCH sont ajoutés sous la forme d'une extension.

7. Appareil cellulaire (1) auquel, en utilisant des informations de notification d'un appareil station de base (2), des éléments d'informations d'un indicateur de cellule HSDPA (High Speed Downlink Packet Access) et d'un indicateur de cellule E-DCH (Enhanced-Dedicated Channel) qui indiquent qu'une cellule sous la commande de l'appareil station de base (2) prend en charge HSDPA et E-DCH, respectivement, sont notifiés, comprenant :
des moyens qui sont configurés pour recevoir un message de reconfiguration auquel les éléments d'informations de l'indicateur de cellule HSDPA et de l'indicateur de cellule E-DCH d'une cellule destination de transfert intercellulaire sont ajoutés et qui est notifié à partir d'un contrôleur de réseau radio (3) qui a déterminé si la cellule destination de transfert intercellulaire prend en charge HSDPA ou E-DCH lorsqu'un transfert intercellulaire de l'appareil cellulaire (1), qui est dans un état de communication par l'intermédiaire d'un canal dédié, est notifié ;
des moyens qui sont configurés pour extraire les éléments d'informations de l'indicateur de cellule HSDPA et de l'indicateur de cellule E-DCH ajoutés au message de reconfiguration notifié à partir du contrôleur de réseau radio (3) ; et
des moyens qui sont configurés pour afficher des informations concernant l'indicateur extrait sur un écran.

8. Appareil cellulaire selon la revendication 7, dans lequel le message de reconfiguration comprend un message à notifier d'un réseau à l'appareil cellulaire au moins lors de la désignation d'un transfert intercellulaire, lorsqu'une transition d'un état de l'appareil cellulaire est effectuée, lorsqu'un changement de paramètre est effectué pour un canal radio comprenant au moins un canal physique, un canal de transport et un canal logique.

9. Appareil cellulaire selon la revendication 8, dans lequel le message de reconfiguration comprend l'un quelconque de messages « d'établissement de support radio », « de reconfiguration de canal physique », « de reconfiguration de canal de transport », « de reconfiguration de support radio », « de confirmation de mise à jour de cellule » et « de transfert intercellulaire vers UTRAN (Universal Terrestrial Radio Access Network) » prescrits par 3GPP (3^{rd} Generation Partnership Project), et les éléments d'informations de l'indicateur de cellule HSDPA et de l'indicateur de cellule E-DCH sont ajoutés sous la forme d'une extension.

10. Procédé d'affichage de cellule de localisation pour une utilisation avec un système de communication mobile dans lequel un appareil station de base (2) notifie à un appareil cellulaire (1), en utilisant des informations de notification, des éléments d'informations d'un indicateur de cellule HSDPA (High Speed Downlink Packet Access) et d'un indicateur de cellule E-DCH (Enhanced-Dedicated Channel) qui indiquent qu'une cellule sous la commande de l'appareil de station de base (2) prend en charge HSDPA et E-DCH, respectivement, comprenant :
la détermination, dans un contrôleur de réseau radio (3), si une cellule destination de transfert intercellulaire prend en charge HSDPA ou E-DCH lorsqu'un transfert intercellulaire de l'appareil cellulaire (1), qui est dans un état de communication par l'intermédiaire d'un canal dédié, est notifié ;
la notification, à l'appareil cellulaire (1) en cours de transfert intercellulaire, d'informations concernant HSDPA et E-DCH pris en charge dans la cellule destination de transfert intercellulaire en utilisant un message de reconfiguration dans lequel des éléments d'informations de l'indicateur de cellule HSDPA et de l'indicateur de cellule E-DCH sont ajoutés, à partir du contrôleur de réseau radio (3) ; et
l'extraction des éléments d'informations de l'indicateur de cellule HSDPA et de l'indicateur de cellule E-DCH dans l'appareil cellulaire (1) du message de reconfiguration, et l'affichage d'informations concernant l'indicateur extrait sur un écran.

11. Procédé d'affichage de cellule de localisation selon la revendication 10, dans lequel le message de reconfiguration comprend un message à notifier d'un réseau à l'appareil cellulaire au moins lors de la désignation d'un transfert intercellulaire, lorsqu'une transition d'un état de l'appareil cellulaire est effectuée, lorsqu'un changement de paramètre est effectué pour un canal radio comprenant au moins un canal physique, un canal de transport et un canal logique.

12. Procédé d'affichage de cellule de localisation selon la revendication 11, dans lequel le message de reconfiguration comprend l'un quelconque de messages « d'établissement de support radio », « de reconfiguration de canal physique », « de reconfiguration de canal de transport », « de reconfiguration de support radio », « de confirmation de mise à jour de cellule » et « de transfert intercellulaire vers UTRAN (Universal Terrestrial Radio Access Network) » prescrits par 3GPP (3^{rd} Generation Partnership Project), et les éléments d'informations de l'indicateur de cellule HSDPA et de l'indicateur de cellule E-DCH sont ajoutés sous la forme d'une extension.
